# EUROPEAN PATENT APPLICATION

(11) **EP 4 564 099 A1**
(43) Date of publication of application: **04.06.2025**
(21) Application number: 24207697.4
(22) Date of filing: 21.10.2024
(51) Int. Cl.: G03G 15/00, H04N 1/23

(54) **IMAGE FORMING METHOD, IMAGE FORMING DEVICE, ELECTRONIC DEVICE, AND STORAGE MEDIUM**

(30) Priority: 30.11.2023 CN 202311627982
(71) Applicant: Zhuhai Pantum Electronics Co., Ltd., Zhuhai, Guangdong (CN)
(72) Inventor: MA, Yangxiao, Zhuhai, Guangdong, (CN)
(74) Representative: Sun, Yiming

(57) **Abstract**

An image forming method, an image forming device, an electronic device, and a storage medium are provided. The method includes: obtaining imaging data and determining demand for each toner by the imaging data, where the imaging data includes at least one type of image data; determining a remaining amount of each toner; detecting whether there is at least one toner whose remaining amount is lower than the demand for the toner by the imaging data; when there is at least one toner whose remaining amount is lower than the demand for the toner by the imaging data, obtaining an imaging mode and adjusting the demand for the toners by the imaging data based on the imaging mode; and performing imaging processing on the imaging data based on the demand for the toners by the imaging data after adjustment.

## Description

### TECHNICAL FIELD

The present disclosure generally relates to the field of image forming technologies and, more particularly, relates to an image forming method, an image forming device, an electronic device, and a storage medium.

### BACKGROUND

Image forming devices such as printers, copiers, and fax machines use toners to form color images. For example, CMYK (Cyan Magenta Yellow black, four-color printing mode) is a color mode commonly used in color printing. CMYK uses the principle of mixing the three primary colors of toners, plus black ink, to mix and superimpose a total of four colors to form full-color printing. The four standard colors are C (Cyan), M (Magenta), Y (Yellow), and K (black).

In some technologies, when an image forming device is performing an imaging operation, if the remaining amount of a toner cannot meet the demand for the toner by image formation, the imaging operation is stopped, which brings inconvenience to the user. To continue the printing operation, in some technologies, when the remaining amount of at least one toner cannot meet the demand of the toner by image formation, an alternative solution is used to continue the imaging operation. For example, a toner with sufficient remaining amount is used to replace a toner with insufficient remaining amount. However, the imaging effect is fixed, which may not be what the user expects and cannot be adjusted according to user needs.

### SUMMARY

In view of this, the present disclosure provides an image forming method, an image forming device, an electronic device, and a storage medium to facilitate the solution of the prior art, if the remaining amount of a toner can not meet the demand for image formation, image forming device continues to perform imaging operations, the imaging effect is fixed, may not be expected by users, can not be adjusted according to user needs.

The first aspect, the present disclosure provides an image forming method applied to an image forming device. The method includes: obtaining imaging data and determining demand for each toner by the imaging data, where the imaging data includes at least one type of image data;
determining a remaining amount of each toner; detecting whether there is at least one toner whose remaining amount is lower than the demand for the toner by the imaging data; when there is at least one toner whose remaining amount is lower than the demand for the toner by the imaging data, obtaining an imaging mode and adjusting the demand for the toners by the imaging data based on the imaging mode;
and performing imaging processing on the imaging data based on the demand for the toners by the imaging data after adjustment.
In a possible implementation of the first aspect, the reduction of the demand for the target toner for the image data of the target type includes:
   In a possible implementation of the first aspect, the adjusting the demand for the toners by the imaging data based on the imaging mode includes:
   determining the image data of a target type corresponding to the imaging mode, and reducing the demand for a target toner by the image data of the target type, wherein the target toner is a toner whose remaining amount is lower than the demand for the toner by the imaging data.

In a possible implementation of the first aspect, the imaging mode includes at least one of a pattern priority mode, a text priority mode, and a life priority mode;
the image data of the target type corresponding to the pattern priority mode is first-type image data, and the first-type image data includes other types of image data in the imaging data except for pattern-type image data;
the image data of the target type corresponding to the text priority mode is second-type image data and the second-type image data includes other types of image data in the imaging data except for text-type image data; and
the image data of the target type corresponding to the life priority mode includes all types of image data.

In a possible implementation of the first aspect, the reducing the demand for the target toner by the image data of the target type includes:
replacing the demand for the target toner by the image data of the target type in the imaging data with the demand for at least one other toner by the image data of the target type, wherein the at least one other toner includes a toner other than the target toner.

In a possible implementation of the first aspect, the reducing the demand for the target toner by the image data of the target type includes:
replacing a first color corresponding to at least part of pixels in the image data of the target type with a second color, wherein the demand for the target toner by a single pixel corresponding to the second color is less than the demand for target toner by a single pixel corresponding to the first color.

In a possible implementation of the first aspect, the reducing the demand for the target toner by the image data of the target type includes:
increasing brightness of the image data of the target type, and/or reducing contrast of the image data of the target type.

In a possible implementation of the first aspect, the adjusting the demand of the toners by the imaging data further includes: reducing the demand of the target toner by non-target type image data.

In a possible implementation of the first aspect, the when there is at least one toner whose remaining amount is lower than the demand for the toner by the imaging data, obtaining the imaging mode includes:
when there is at least one toner whose remaining amount is lower than the demand for the toner by the imaging data, detecting whether the remaining amount of each toner is not less than a corresponding remaining amount threshold; and
when there are at least two toners whose remaining amount is not less than the corresponding remaining amount threshold, obtaining the imaging mode.

In a possible implementation of the first aspect, the when there is at least one toner whose remaining amount is lower than the demand for the toner by the imaging data, obtaining the imaging mode includes:
when there is at least one toner whose remaining amount is lower than the demand for the toner by the imaging data, obtaining a toner replacement table is obtained, and detecting whether the target toner in the imaging data is able to be replaced with at least one other corresponding toner, wherein the toner replacement table is used to record at least one other toner corresponding to the target toner; and
when the target toner in the imaging data is able to be replaced with at least one other corresponding toner, obtaining the imaging mode.

In a possible implementation of the first aspect, the when there is at least one toner whose remaining amount is lower than the demand for the toner by the imaging data, obtaining the imaging mode includes:
when there is at least one toner whose remaining amount is lower than the demand for the toner by the imaging data, obtaining a color replacement table, and detecting whether a first color corresponding to at least a portion of pixel points in the imaging data is able to be replaced with a second color, wherein the toner replacement table is used to record the second color corresponding to the first color; and
when the first color is able to be replaced with the second color, obtaining the imaging mode.

The second aspect, the present disclosure provides an image forming device. The image forming device includes:
a determination unit, configured to obtain imaging data and determine demand for each toner by the imaging data, where the imaging data includes at least one type of image data;
an adjustment unit, configured to determine a remaining amount of each toner, detect whether there is at least one toner whose remaining amount is lower than the demand for the toner by the imaging data, obtain an imaging mode and adjust the demand for the toners by the imaging data based on the imaging mode when there is at least one toner whose remaining amount is lower than the demand for the toner by the imaging data;
and an imaging unit, configured to perform imaging processing on the imaging data based on the demand for the toners by the imaging data after adjustment.

The third aspect, the present disclosure provides an electronic device. The electronic device includes one or more processors and a memory storing computer program instructions that, when being executed, cause the one or more processors to execute a method described in any of the first aspects above.

The fourth aspect, the present disclosure provides a computer readable storage medium including a stored program in which the device on which the computer readable storage medium is controlled while the program is running performs the method described in any of the first aspect.

The scheme provided in the embodiment of the present disclosure can continue the imaging processing when there is insufficient remaining amount of at least one toner, and at the same time can meet the user's personalized requirements for the imaging effect of the imaging data.

### BRIEF DESCRIPTION OF THE DRAWINGS

In order to more clearly state the technical scheme of the embodiments of this application, the following will be a brief introduction to the drawings required to be used in the embodiments. It is obvious that the drawings described below are only some embodiments of this application. For ordinary technicians in the field, other drawings can be obtained according to these drawings without creative labor.
FIG. 1 illustrates a flow chart of an exemplary image forming method according to various disclosed embodiments of the present disclosure.
FIG. 2 illustrates an application scenario of an exemplary image forming method according to various disclosed embodiments of the present disclosure.
FIG. 3a to FIG. 3c illustrate an application scenario of another exemplary image forming method according to various disclosed embodiments of the present disclosure.
FIG. 4a to FIG. 4c illustrate an application scenario of another exemplary image forming method according to various disclosed embodiments of the present disclosure.
FIG. 5 illustrates an application scenario of another exemplary image forming method according to various disclosed embodiments of the present disclosure.
FIG. 6 illustrates an application scenario of another exemplary image forming method according to various disclosed embodiments of the present disclosure.
FIG. 7 illustrates a flow chart of another exemplary image forming method according to various disclosed embodiments of the present disclosure.
FIG. 8 illustrates a flow chart of another exemplary image forming method according to various disclosed embodiments of the present disclosure.
FIG. 9 illustrates a flow chart of another exemplary image forming method according to various disclosed embodiments of the present disclosure.
FIG. 10 illustrates an exemplary image forming device according to various disclosed embodiments of the present disclosure.
FIG. 11 illustrates an exemplary electronic device according to various disclosed embodiments of the present disclosure.

### DETAILED DESCRIPTION

Reference will now be made in detail to exemplary embodiments of the disclosure, which are illustrated in the accompanying drawings.

Wherever possible, the same reference numbers will be used throughout the drawings to refer to the same or like parts. The embodiments disclosed herein are exemplary only. Other applications, advantages, alternations, modifications, or equivalents to the disclosed embodiments are obvious to those skilled in the art and are intended to be encompassed within the scope of the present disclosure.

It should be noted that the terms used in the embodiments of the present disclosure are only for the purpose of describing specific embodiments, and are not intended to limit the scope of the present disclosure. As used in the embodiments of the present disclosure and the appended claims, the singular forms such as "a", "said" and "the" are also intended to include the plural forms unless the context clearly indicates otherwise.

It should be understood that the term "and/or" used in this specification is just for relationship description of related objects, indicating that there can be three kinds of relationships. For example, A and/or B, which can mean that A exists alone, A and B exist at the same time, and B exists alone. In addition, the character "/" in this specification generally indicates that the related objects are in an "or" relationship.

Image forming devices such as printers, copiers, and fax machines use toners to form color images. For example, CMYK (Cyan Magenta Yellow black, four-color printing mode) is a color mode commonly used in color printing. CMYK uses the principle of mixing the three primary colors of toners, plus black ink, to mix and superimpose a total of four colors to form full-color printing. The four standard colors are C (Cyan), M (Magenta), Y (Yellow), and K (black).

In some technologies, when an image forming device is performing an imaging operation, if the remaining amount of a toner cannot meet the demand for the toner by image formation, the imaging operation is stopped, which brings inconvenience to the user. To continue the printing operation, in some technologies, when the remaining amount of at least one toner cannot meet the demand for the toner by image formation, an alternative solution is used to continue the imaging operation. For example, a toner with sufficient remaining amount is used to replace a toner with insufficient remaining amount. However, the imaging effect is fixed, which may not be what the user expects and cannot be adjusted according to user needs.

The present disclosure provides an image forming method, an image forming device, an electronic device, and a storage medium. In the present disclosure, imaging data may be obtained, and the demand for each toner required by the imaging data may be determined. The imaging data may include at least one-type image data. A remaining amount of each toner may be determined, and whether there is at least one toner whose remaining amount is lower than the demand for the toner by the imaging data may be detected. When there is at least one toner whose remaining amount is lower than the demand for the toner by the imaging data, an imaging mode may be obtained, and the demand for the toners by the imaging data may be adjusted based on the imaging mode. Imaging processing may be performed on the imaging data based on the adjusted demand for the toners by the imaging data. When there is at least one toner whose remaining amount is lower than the demand for the toner by the imaging data, the demand for the toners by the imaging data may be adjusted based on the imaging mode. For different imaging modes, the adjustment of the demand for the toners by the imaging data may be different, and the imaging effect of the imaging data may be also different. Therefore, while the imaging process may continue when there is insufficient remaining amount of at least one toner, the personalized needs of the user for the imaging effect of the imaging data may also be met.

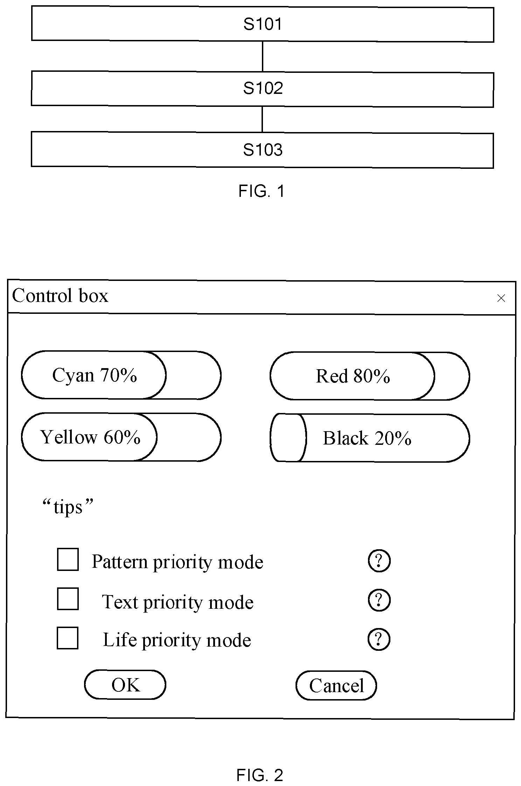

The present disclosure provides an image forming method. As shown in FIG. 1 which is a flowchart of an exemplary image forming method provided by the present disclosure, in one embodiment, the method may include S101 to S103.

In S101, imaging data may be obtained, and demand for each toner by the imaging data may be determined.

The imaging data may include at least one type of image data. In one embodiment, toners may be required in the process of imaging the imaging data. Different imaging data may have different demands for the toners. After obtaining the imaging data, it may be necessary to determine the demand for each toner by the imaging data. In some embodiments, the demand for each toner by the imaging data may be determined based on the resolution of the imaging data or the coverage of each toner.

In some embodiments, the imaging data may include one type of image data or multiple types of image data. For example, the imaging data may include pattern-type image data, text-type image data, and the like.

It should be noted that the demand for each toner by the imaging data may be the amount of each toner required to form the image corresponding to the imaging data, and the demand may be the actual amount required or the set amount required.

Ion S102, the remaining amount of each toner may be determined, and whether there is at least one toner whose remaining amount is lower than the demand for the toner by the imaging data. When there is at least one toner whose remaining amount is lower than the demand for the toner by the imaging data, an imaging mode may be obtained, and the demand for the toners by the imaging data may be adjusted based on the imaging mode.

In one embodiment, for each toner, the remaining amount of the toner may be compared with the demand for the toner by the imaging data to determine the value relationship between the remaining amount of the toner and the demand for the toner by the imaging data.

In some embodiments, the remaining amount of each toner may be obtained from a storage device of an image forming device, or from a storage device of another device, such as a cloud server.

In some embodiments, after the imaging data is subjected to image forming processing, the remaining amount of the toner may be updated based on the toner consumption corresponding to the required amount of the imaging data for the toner.

In some embodiments, the remaining amount of the toner may be determined by a sensor determining at least one of the weight, number of light spots, or resistance of the toner. Alternatively, the toner consumption may be determined by using a sensor to determine at least one of the weight, number of light spots, or resistance of the toner. The remaining amount of the toner may be determined by subtracting the toner consumption from the total amount of toner when the toner is brand new and has not been used.

When there is at least one toner whose remaining amount is lower than the demand for the toner by the imaging data, the imaging data cannot be imaged based on the demand for the toner by the imaging data. At this time, the demand for the toner by the imaging data may be adjusted such that the remaining amount of the toner meets the demand for the toner by the imaging data after adjustment.

The imaging mode may be used to indicate the expectation of the formed image based on the imaging data, that is, the expectation of the imaging effect of the imaging data. After acquiring the imaging mode, the demand for the toners by the imaging data may be adjusted based on the imaging mode to meet the expectation of the formed image based on the imaging data. For different imaging modes, the expectation of the formed image based on the imaging data may be different, and the adjustment of the demand for the toner by the imaging data may be different. For example, the expectation of the image formed based on the imaging data may include that the imaging effect of the text type image data is clear and the imaging effect of the pattern type image data is general. The expectation of the image formed based on the imaging data may also include that the imaging effect of the pattern type image data is clear and the imaging effect of the text type image data is general. The expectation of the image formed based on the imaging data may also include that the imaging effect of all types of image data is general.

In some embodiments, the demand for one toner by the imaging data may be adjusted, or the demand for multiple toners by the imaging data may be adjusted.

In one embodiment, adjusting the demand for the toners by the imaging data may include: determining the image data of the target type corresponding to the imaging mode, and reducing the demand for a target toner by the image data of the target type. The target toner may be a toner whose remaining amount is lower than the demand for the toner by the imaging data.

In one embodiment, when there is at least one toner whose remaining amount is lower than the demand for the toner by the imaging data, the imaging data cannot be imaged based on the current demand for the toners by the imaging data. The remaining amounts of the toners may be made to meet the demand for the toners by the imaging data by reducing the demand for the target toner by some or all types of imaging data, that is, reducing the demand for the toner by the imaging data of the target type. To meet the personalized needs of users, different imaging modes may correspond to imaging data of different target types.

In one embodiment, the imaging mode may include at least one of a pattern priority mode, a text priority mode, or a life priority mode.

The image data of the target type corresponding to the pattern priority mode may be the first-type image data. The first-type image data may include other types of image data in the imaging data except the pattern-type image data. The image data of the target type corresponding to the text priority mode may be the second-type image data; and the second-type image data may include other types of image data in the imaging data except the text-type image data. The image data of the target type corresponding to the life priority mode may include all types of image data.

In one embodiment, when the imaging mode is the pattern priority mode, to reduce the demand for the toner by the imaging data while ensuring the imaging processing effect of the pattern-type image data, the image data of the target type may be determined as other types of image data in the imaging data except the pattern-type image data, that is, the image data of the target type may be determined as the first-type image data. That is, the demand for the target toner by the first-type image data may be reduced.

When the imaging mode is the text priority mode, to reduce the demand for the toner by the imaging data while ensuring the imaging processing effect of the text-type image data, the image data of the target type may be determined as other types of image data in the imaging data except the text type image data, that is, the image data of the target type may be determined as the second-type image data. The demand for target toner by the first-type image data may be reduced.

When the imaging mode is the life priority mode, to reduce the demand for the toner by the imaging data while ensuring the imaging processing effect of the text-type image data, the demand for target toner by all of the image data may be reduced, that is, the image data of the target type may be determined as all types of image data in the imaging data.

In some embodiments, when the imaging data includes only one-type image data, for different imaging modes, such as pattern priority mode, text priority mode, or life priority mode, the image data of this type may be used as the image data of the target type by default, thereby reducing the demand for the target toner by the image data of the target type.

In some embodiments, the imaging data may include pattern type imaging data and text type imaging data, and the pattern type image data and text type image data in the imaging data may be determined by edge detection. For example, edge detection may be performed on the imaging data using the Sobel operator or the Canny edge detection algorithm, and each pixel in the imaging data may be determined as one of an edge pixel and a non-edge pixel. The imaging data may be divided into at least one imaging data area. And, for each of the at least one imaging data area, whether the density of the edge pixels of the imaging data area is larger than a preset edge density threshold may be determined. When the density of the edge pixels of the imaging data area is larger than the preset edge density threshold, the imaging data area may be determined as text type image data. When the density of the edge pixels of the imaging data area is not larger than the preset edge density threshold, the imaging data area may be determined as pattern type image data. It should be noted that the method for determining the pattern type image data and the text type image data in the imaging data is not specifically limited here, and other implementation methods may also be used. For example, when using file processing software such as word or PDF to send imaging data to an image forming device, before sending the imaging data to the image forming device, the file processing software may first distinguish the image data in the imaging data into pattern type image data and text type image data. Alternatively, a graphic segmentation algorithm may be used to distinguish the pattern type image data and text type image data in the imaging data.

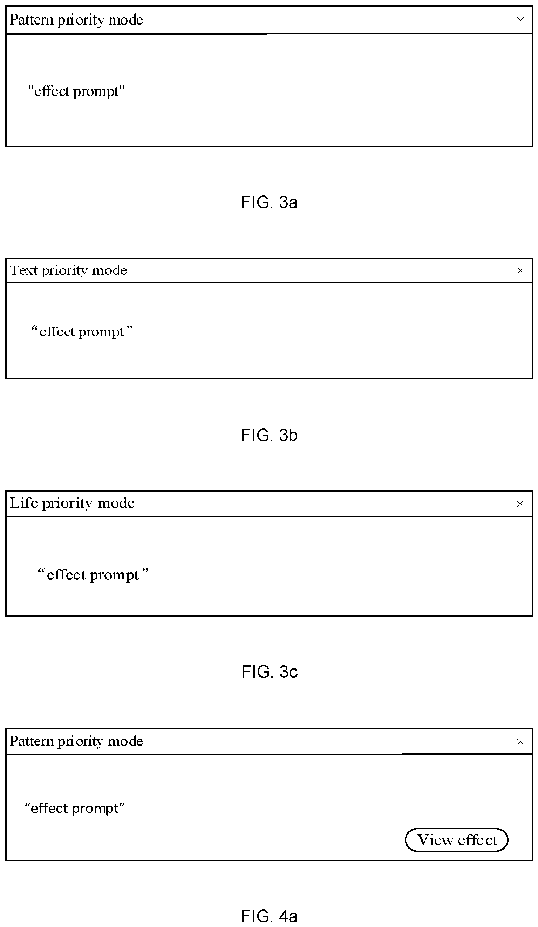

In some embodiments, the imaging effects of various imaging modes may be displayed to the user through prompt information. Exemplarily, assuming that the imaging mode includes a pattern priority mode, a text priority mode or a life priority mode, the imaging mode may be obtained through the dialog box shown in FIG. 2 (The "tips" in the dialog box are as follows: " Black toner is not enough, continue printing output? If yes, please select an imaging mode"). In response to the click operation of the help button corresponding to the imaging mode, a prompt box corresponding to the imaging mode may be popped up. For example, in response to the click operation of the help button corresponding to the pattern priority mode, a prompt box corresponding to the pattern priority mode as shown in FIG. 3a may be popped up, prompting the user that the pattern priority mode focuses on ensuring the pattern color effect, but the text clarity is general, and the toner consumption is large, the content indicated by the "effect prompt" in the prompt box is as follows: " The pattern color effect is ensured, but the text clarity is general, and the toner consumption is large". In response to the click operation of the help button corresponding to the text priority mode, a prompt box corresponding to the text priority mode as shown in FIG. 3b may be popped up, prompting the user that the text priority mode focuses on ensuring the clarity of the text, but the pattern presentation effect is general, and the toner consumption is small, the content indicated by the "effect prompt" in the prompt box is as follows: " The clarity of the text is ensured, but the pattern presentation effect is general, and the toner consumption is small ". In response to the click operation of the help button corresponding to the life priority mode, a prompt box corresponding to the life priority mode as shown in FIG. 3c may be popped up, prompting the user that the life priority mode focuses on reducing equipment loss, the pattern color presentation effect and the text clarity are general, and the toner consumption is small, the content indicated by the "effect prompt" in the prompt box is as follows: "Equipment loss is reduced, the pattern color presentation effect and the text clarity are general, and the toner consumption is small ".

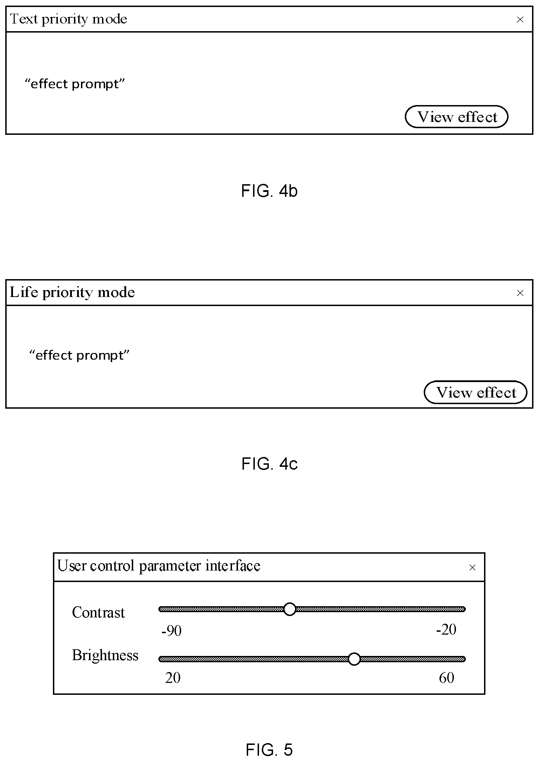

In some embodiments, the imaging effects of various imaging modes may also be displayed to the user through imaging effect diagrams. FIG. 4a, FIG. 4b, and FIG. 4c show the prompt boxes corresponding to the pattern priority mode, text priority mode and life priority mode respectively. In response to the click operation of "View Effect", the effect diagram corresponding to the imaging mode may pop up. The effect diagram may be directly the final output effect diagram after being processed by the corresponding imaging mode. To enable users to understand the imaging effect corresponding to the imaging mode more intuitively, the effect diagram corresponding to the imaging mode may also be the original image that has not been processed by the imaging mode and the final effect diagram that has been processed by the corresponding imaging mode. In this way, the user may more clearly understand whether the imaging effect of the imaging mode meets user needs, the user experience may be improved, unnecessary imaging processing and paper waste may be avoided, and equipment loss may be reduced.

When the user checks one of the imaging modes and clicks the "Confirm" button, the image forming device may acquire the corresponding imaging mode. When the user clicks the "Cancel" button, the image forming process may be abandoned.

In some embodiments, regarding acquiring the imaging mode, in addition to providing an interface for user selection operations as described above and determining the imaging mode according to the user's operation, other methods may be also adopted. For example, in one embodiment, the method may include that when the imaging data includes only one-type image data, the imaging mode is determined according to the type of the corresponding image data. For example, when the imaging data includes only pattern-type image data, the imaging mode may be determined to be a text priority mode, that is, the pattern-type image data may be used as the target type image data, thereby reducing the demand for the toner by the target type image data. In another embodiment, the imaging mode may be determined to be the pattern priority mode, while the pattern-type image data may be still used as the target type image data, thereby reducing the demand for the toner by the target type image data. In another method, the proportions of various types of image data in the imaging data may be detected, and the imaging mode may be determined according to the proportions of various types of image data. For example, when the proportion of the pattern-type image data in the imaging data is larger than the proportion of the text-type image data, to ensure the imaging effect of the pattern-type image data, the text-type image data may be used as the image data of the target type, and the imaging mode may be determined to be the pattern priority mode; or, when the proportion of the pattern-type image data in the imaging data is larger than that of text-type image data, to further reduce the demand for toner by the image data of the target type, the pattern-type image data may be used as the image data of the target type, and the imaging mode may be determined to be the text priority mode. Of course, the above-mentioned determination of the imaging mode is only an exemplary description, and other methods may be used without intellectual labor, which will not be repeated here.

In one embodiment, reducing the demand for the target toner by the image data of the target type may include: replacing the demand for the target toner by the image data of the target type in the imaging data with the demand for at least one other toner by the image data of the target type. The at least one other toner may be a toner other than the target toner. To reduce the demand for the target toner by the imaging data of the target type, the target toner in the imaging data of the target type may be replaced by one other toner, or the target toner in the imaging data of the target type may be replaced by a toner formed by mixing multiple other toners. In some embodiments, to ensure the imaging effect, the color of the other toner may be similar to the color of the target toner. For example, for the CMYK imaging mode, when the target toner is a cyan toner, the target toner in the image data of the target type may be replaced by a black toner. In some embodiments, to ensure the imaging effect, the color formed by mixing the multiple other toners may be similar to the color of the target toner. For example, when the target toner is a black toner, the target toner in the image data of the target type may be replaced by a toner formed by mixing cyan toner, red toner, and yellow toner in proportion. When the target toner is a yellow toner, the target toner in the image data of the target type may be replaced by a toner formed by mixing red toner and cyan toner in proportion.

In one embodiment, when it is determined that the image data of the target type in the imaging data has a demand for a target toner, such as a magenta toner, that is higher than the remaining amount of the target toner (the magenta toner), to reduce the demand for the target toner magenta toner by the image data of the target type, other toners such as one of cyan toner, yellow toner, and black toner or any combination of toners may be used to replace the target toner. In one embodiment, the color of the image data of the current target type may be determined based on the values of each of the three RGB channels corresponding to the image data of the target type in the imaging data, thereby determining the demand for various toners for the current color. When it is determined that the remaining amount of a certain toner is lower than the demand for that toner, to ensure that the imaging data is able to be imaged normally, other toners or any combination of other toners may be used to replace that toner. For example, according to the values (255,0,0) of the three RGB channels corresponding to the image data of the target type in the imaging data, it may be determined that the corresponding color of the current image data is red, and the corresponding demand for various toners CMYK should be (0,100,100,0). When the remaining amount of the magenta toner is only 40, that is, the remaining amount of the magenta toner is lower than the demand for the magenta toner, other toners or any combination of other toners may be used to replace the toner. For example, black toner may be used to replace the magenta toner and CMYK may be adjusted to (0,0,0,40); or cyan toner and yellow toner may be used to replace it and CMYK may be adjusted to (35,0,60,0); or cyan toner, yellow toner and black toner may be used to replace it and CMYK may be adjusted to (100,0,40,15), etc. Alternatively, based on the remaining amount of the current toner, combined with other color toners, CMYK may be adjusted to (0, 40, 40, 0), thereby reducing the demand for the target toner.

In some embodiments, after determining the pattern type image data and the text type image data in the imaging data, the demand for the toner by the pattern type image data and the demand for the toner by the text type image data may be determined respectively. Therefore, when the demand for the toner by the imaging data are adjusted by replacing the target toner with other toners, the demand for the toner by the pattern type image data and the demand for the toner by the text type image data may be determined respectively based on the remaining amount of the target toner.

In one embodiment, reducing the demand for the target toner by the target type image data may include: replacing a first color corresponding to at least part of the pixels in the target type image data with a second color. The demand for the target toner by a single pixel corresponding to the second color may be less than the demand for the target toner by a single pixel corresponding to the first color.

For example, based on the value of each of the RGB three channels corresponding to at least some of the pixels in the image data of the target type in the imaging data, the first color corresponding to at least some of the pixels in the image data of the current target type may be determined, thereby determining the demand for various toners by the current first color. When it is determined that the remaining amount of a certain toner is lower than the demand for the toner, in order to ensure that the imaging data is able to be imaged normally, the first color corresponding to the at least some of the pixels in the image data of the target type may be replaced with the second color, and the second color may be a color similar to the first color. For example, according to the value of each channel of the RGB three channels corresponding to at least part of the pixels in the image data of the target type, such as the values of each channel of the RGB three channels corresponding to a certain pixel (255, 0, 0), it may be determined that the color corresponding to the pixel is red, and the corresponding demand for various toners CMYK may be (0, 100, 100, 0). When the remaining amount of magenta toner is only 45, that is, the remaining amount of magenta toner is lower than the demand for magenta toner, orange-red, which is similar to red, may be used as the target color, and the corresponding demand for various toners CMYK may be adjusted to (0, 45, 30, 0), or (0, 45, 45, 0), where the demand for magenta toner by a single pixel corresponding to orange-red is smaller than the demand for magenta toner by a single pixel corresponding to red. In another embodiment, to reduce the demand for the target toner by the image data of the target type, the first color may be replaced by the second color with less demand for target toner by a single pixel. In some embodiments, to ensure the imaging effect, the second color and the first color may be similar colors. For example, when red toner is the target toner, the first color may be dark blue with CMYK components of (100, 60, 0, 45), and the second color may be dark blue with CMYK components of (85, 50, 0, 0) similar to the first color.

In one embodiment, when the target toner is the black toner, the demand for the black toner by the image data of the target type may be reduced by reducing the proportion of black toner in UCR (Under Color Remove) or GCR (Gray Component Replacement).

In one embodiment, the area of the imaging data of the target type may be reduced to reduce the demand for the target toner by the imaging data of the target type. For example, when the imaging data of the target type is text-type imaging data, the font size of the text-type imaging data may be reduced.

In one embodiment, to reduce the demand for the target toner by the imaging data of the target type, the resolution of the nozzle may be reduced, the printing speed may be increased, or the toner concentration or density may be reduced, before the imaging data of the target type is imaged.

In one embodiment, reducing the demand for the target toner by the imaging data of the target type may include: increasing the brightness of the imaging data of the target type, and/or reducing the contrast of the imaging data of the target type.

Increasing the brightness of the imaging data of the target type may reduce the demand for all toners by the imaging data of the target type. Reducing the contrast of the imaging data of the target type may reduce the demand for all toners by the imaging data of the target type.

In some embodiments, the brightness adjustment range or the contrast adjustment range may be determined based on the remaining amount of the toners. The user may select the brightness within the brightness adjustment range and the contrast within the contrast adjustment range. Exemplarily, assuming that the brightness adjustment range is determined to be [20,60] and the contrast adjustment range is determined to be [-90,-20] based on the remaining amount of the toners, a control parameter adjustment interface as shown in FIG. 5 may be popped up, and the user may select the contrast or brightness by operating on the interface. Further, the corresponding effect diagram may be displayed to the user.

In one embodiment, adjusting the demand for the toners by the imaging data may also include: reducing the demand for the target toner by the non-target type imaging data.

To further reduce the demand for the target toner by the imaging data, in addition to reducing the demand for the target toner by the imaging data of the target type, the demand for the target toner by the non-target type imaging data may also be reduced.

For example, assuming that the imaging mode is the pattern priority mode, the image data of the target type is the first-type image data, and the first-type image data is other types of image data in the imaging data except the pattern-type image data, after reducing the demand for the target toner by the first-type image data, the remaining amount of the toner may still not meet the demand for the toner by the imaging data, that is, the imaging effect of the pattern data may still not be guaranteed at this time. The demand for the target toner by the pattern type image data may be reduced.

For another example, assuming that the imaging mode is the text priority mode, the image data of the target type is the second-type image data, and the first-type image data is the image data of other types in the imaging data except the text-type image data. After reducing the demand for the target toner by the first-type image data, the remaining amount of the toner may still not meet the demand for the toner by the imaging data, that is, the imaging effect of the text data may still not be guaranteed at this time, and the demand for the target toner by the text type image data may be reduced.

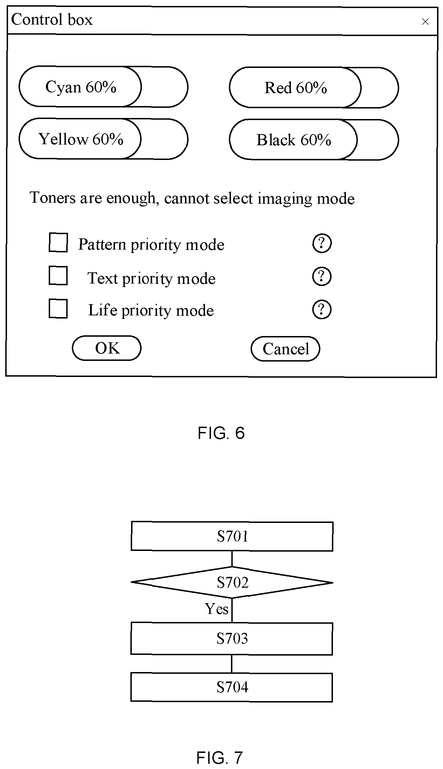

In one embodiment, when there is no toner whose remaining amount is lower than the demand for the toner by the imaging data, that is, the remaining amount of each toner is not lower than the demand for the toner by the imaging data, the user may be prompted that the toner is sufficient and the imaging mode does not support user selection, as shown in FIG. 6. The image forming device may perform imaging processing on the imaging data based on the demand for the toner by the imaging data.

In S103, based on the demand for the toners by the imaging data after adjustment, the imaging data may be imaged.

In one embodiment, after the demand for the toners by the imaging data is adjusted, the remaining amount of the toners may meet the demand for the toners by the imaging data. At this time, the imaging data may be imaged based on the demand for the toners by the imaging data after adjustment. In this way, when there is at least one toner whose remaining amount is lower than the demand for the toner by the imaging data, the demand for the toner by the imaging data after adjustment may be different for different imaging modes, and the imaging effect of the imaging data may also be different. In this way, while the imaging process may continue when there is at least one toner whose remaining amount is insufficient, the personalized needs of the user for the imaging effect of the imaging data may also be met.

In another embodiment shown in FIG. 7, the image forming method may include:
S701: obtaining imaging data and determining demand for each toner by the imaging data;
S702: determining remaining amount of each toner and determining whether there is at least one toner whose remaining amount is less than the demand for the at least one toner by the imaging data;
S703: When there is at least one toner whose remaining amount is less than the demand for the at least one toner by the imaging data, detecting whether the remaining amount of the toners is not less than corresponding remaining amount thresholds; and when there are at least two toners whose remaining amount is not less than the corresponding remaining amount thresholds, obtaining the imaging mode, and adjusting the demand for the toners by the imaging data based on the imaging mode; and
S704: based on the demand for the toners by the imaging data after adjustment, imaging the imaging data.

For S701 and S702, the references may be made to S101 and S102 in the previous embodiments.

To determine whether the remaining toners are able to be used to process the imaging data when the remaining amount of at least one toner is lower than the demand of the toner by the imaging data, the remaining amount of the toners may be further compared with the corresponding remaining amount thresholds. When the remaining amounts of at least two toners are not lower than the corresponding remaining amount thresholds, it may be considered that the remaining toners are able to be used to process the imaging data, and the imaging mode may be obtained. When the remaining amounts of at least two toners are not lower than the corresponding remaining amount thresholds, it may be considered that the remaining toners are not be able to be used to process the imaging data. At this time, corresponding prompt information may be sent to the user.

For adjusting the demand for the toners by the imaging data based on the imaging mode, the references may be made to S102 in the previous embodiments.

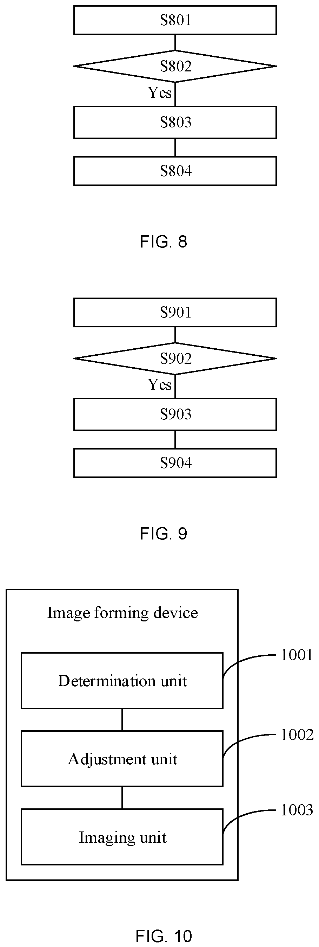

In another embodiment shown in FIG. 8, the image forming method may include:
S801: obtaining imaging data and determining demand for each toner by the imaging data;
S802: determining remaining amount of each toner and determining whether there is at least one toner whose remaining amount is less than the demand for the at least one toner by the imaging data;
S803: When there is at least one toner whose remaining amount is less than the demand for the at least one toner by the imaging data, obtaining a toner replacement table, detecting whether the target toner in the imaging data can be replaced with at least one other toner based on the toner replacement table; and, when the target toner in the imaging data can be replaced with at least one other toner, obtaining the imaging mode and adjusting the demand for the toners by the imaging data based on the imaging mode; and
S804: based on the demand for the toners by the imaging data after adjustment, imaging the imaging data.

For S801 and S802, references may be made to S101 and S102 described in the previous embodiments.

The toner replacement table may be used to record at least one other toner corresponding to the target toner.

To determine whether the remaining toners are able to be used to perform imaging processing on the imaging data when the remaining amount of at least one toner is lower than the demand of the toner by the imaging data, whether the target toner in the imaging data can be replaced with at least one other toner may be determined based on the toner replacement table. When it is determined that the target toner in the imaging data can be replaced with at least one other toner, it may be considered that the imaging processing can continue. In some embodiments, when it is determined that the target toner in the imaging data can be replaced with at least one other toner, the target toner in the imaging data may be replaced with the at least one other toner. When it is determined that the target toner in the imaging data cannot be replaced with at least one other toner, it may be considered that the imaging data cannot be imaged using the remaining toners. At this time, a corresponding prompt message may be sent to the user.

For example, assuming that the target toner is the cyan toner and at least one other toner corresponding to the cyan toner in the toner replacement table is the black toner, it may be detected whether the cyan toner in the imaging data can be replaced with the black toner.

The toner replacement table may be obtained from the storage device of the image forming apparatus, or from a storage device of other devices (such as a cloud server), or from an external device of the image forming device (such as a computer or a memory card).

For adjusting the demand for the toners by the imaging data based on the imaging mode, the references may be made to S102 in the previous embodiments.

For adjusting the demand for the toners by the imaging data based on the imaging mode, the references may be made to S102 in the previous embodiments.

In another embodiment shown in FIG. 9, the image forming method may include:
S901: obtaining imaging data and determining demand for each toner by the imaging data;
S902: determining the remaining amount of each toner and determining whether there is at least one toner whose remaining amount is less than the demand for the at least one toner by the imaging data;
S903: When there is at least one toner whose remaining amount is less than the demand for the at least one toner by the imaging data, obtaining a color replacement table, detecting whether the first color corresponding to at least a portion of the pixel points in the imaging data can be replaced with the second color based on the color replacement table; and, when the first color corresponding to at least a portion of the pixel points in the imaging data can be replaced with the second color, obtaining the imaging mode and adjusting the demand for the toners by the imaging data based on the imaging mode; and
S904: based on the demand for the toners by the imaging data after adjustment, imaging the imaging data.

For S901 and S902, references may be made to S101 and S102 described in the previous embodiments.

The color replacement table may be used to record the second color corresponding to the first color.

To determine whether the remaining toners are able to be used to perform imaging processing on the imaging data when the remaining amount of at least one toner is lower than the demand of the toner by the imaging data, whether the first color corresponding to at least a portion of the pixel points in the imaging data can be replaced with the second color may be determined based on the color replacement table. When it is determined that the first color can be replaced with the second color, it may be considered that the imaging processing can continue. In some embodiments, when it is determined that the first color corresponding to at least a portion of the pixel points in the imaging data can be replaced with the second color, the first color corresponding to at least a portion of the pixel points in the imaging data may be replaced with the second color. When it is determined that the first color corresponding to at least a portion of the pixel points in the imaging data cannot be replaced with the second color, it may be considered that the imaging data cannot be imaged using the remaining toners. At this time, a corresponding prompt message may be sent to the user.

For example, assuming that the target toner is the red toner, the first color corresponding to a pixel point in the image data is dark blue with CMYK components of (100, 60, 0, 45), and the second color corresponding to the first color in the color replacement table is dark blue with CMYK components of (85, 50, 0, 0), whether the first color corresponding to the pixel in the image data can be replaced by the second color may be detected.

The color replacement table may be obtained from the storage device of the image forming apparatus, or from a storage device of other devices (such as a cloud server), or from an external device of the image forming device (such as a computer or a memory card).

For adjusting the demand for the toners by the imaging data based on the imaging mode, the references may be made to S102 in the previous embodiments.

The present disclosure also provides an image forming device. As shown in FIG. 10, in one embodiment, the image forming device may include:
a determination unit 1001, used to obtain imaging data and determine the demand for each toner by the imaging data, where the imaging data includes at least one type of imaging data;
an adjustment unit 1002, used to determine the remaining amount of each toner, detect whether there is at least one toner whose remaining amount is lower than the demand of the toner by the imaging data, obtain an imaging mode when there is at least one toner whose remaining amount is lower than the demand of the toner by the imaging data, and adjust the demand of the toners by the imaging data based on the imaging mode; and
an imaging unit 1003, used to perform imaging processing on the imaging data based on the demand of the toners by the imaging data after adjustment.

In one embodiment, the adjustment unit 1002 may be used to: determine the target type of image data corresponding to the imaging mode, and reduce the demand for a target toner by the target type of image data. The target toner may be a toner whose remaining amount is lower than the demand for the toner by the imaging data.

In one embodiment, the imaging mode may include at least one of a pattern priority mode, a text priority mode, or a life priority mode. The target type of image data corresponding to the pattern priority mode may be a first type of image data, and the first type of image data may be other types of image data in the imaging data except the pattern type. The target type of image data corresponding to the text priority mode may be a second type of image data, and the second type of image data may be other types of image data in the imaging data except the text type. The target type of image data corresponding to the life priority mode may be all types of image data.

In one embodiment, the adjustment unit 1002 may be used to replace the demand for the target toner by the target type of image data in the imaging data with the demand for at least one other toner by the target type of image data. The at least one other toner may be a toner except the target toner.

In one embodiment, the adjustment unit 1002 may be used to replace the first color corresponding to at least part of the pixels in the image data of the target type with a second color. The demand for the target toner by a pixel corresponding to the second color may be less than the demand for the target toner by a pixel corresponding to the first color.

In one embodiment, the adjustment unit 1002 may be used to increase the brightness of the image data of the target type, and/or reduce the contrast of the image data of the target type.

In one embodiment, the adjustment unit 1002 may be used to reduce the demand for the target toner by the image data of the non-target types.

In one embodiment, the adjustment unit 1002 may be used to: detect whether the remaining amount of the toners is not less than corresponding remaining amount thresholds; and when there are at least two toners whose remaining amount is not less than the corresponding remaining amount thresholds, obtain the imaging mode.

In one embodiment, the adjustment unit 1002 may be used to: obtain a toner replacement table when the toner replacement table exits; detect whether the target toner in the imaging data can be replaced with at least one other toner based on the toner replacement table; and obtain the imaging mode when the target toner in the imaging data can be replaced with at least one other toner. The toner replacement table may be used to record at least one other toner corresponding to the target toner.

In one embodiment, the adjustment unit 1002 may be used to: obtain a color replacement table when the color replacement table exists, detect whether the first color corresponding to at least part of the pixels in the imaging data can be replaced with a second color based on the color replacement table, and obtain the imaging mode when the first color can be replaced with the second color. The color replacement table may be used to record the second color corresponding to the first color.

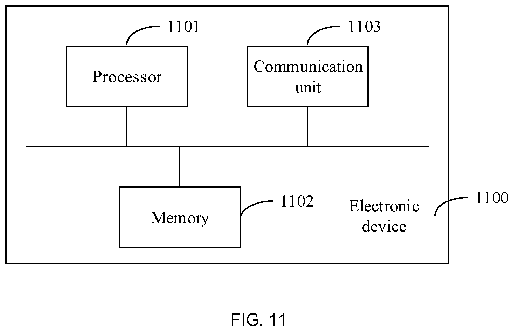

The present disclosure also provides an electronic device. As shown in FIG. 11, in one embodiment, the electronic device 1100 may include: a processor 1101, a memory 1102 and a communication unit 1103. These components communicate through one or more buses. Those skilled in the art will understand that the structure of the electronic device shown in the figure is used as an example to illustrate the present disclosure, and does not limit the scope of the present disclosure. The electronic device may be a bus structure or a star structure, and may also include more or less components than shown, or combine certain components, or arrange different components.

The communication unit 1103 may be used to establish a communication channel such that the electronic device is able to communicate with other devices, receive user data sent by other devices, or send user data to other devices.

The processor 1101 may be a control center of the electronic device. The processor 1101 may be configured to use various interfaces or lines to connect various parts of the entire electronic device, execute software programs and/or modules stored in the memory 1102, and call data stored in the memory to perform various functions of the electronic device and/or process data. The processor may include an integrated circuit (IC), for example, it may be composed of a single packaged IC, or it may be composed of multiple packaged ICs with the same or different functions. For example, the processor 1101 may include only a central processing unit (CPU). In some embodiments, the CPU may be a single computing core or may include multiple computing cores.

The memory 1102 may be used to store the execution instructions of the processor 1101. The memory 1102 may include any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

When the execution instructions in the memory 1102 are executed by the processor 1101, the electronic device 1100 is enabled to execute any image forming method provided by various embodiments of the present disclosure.

The present disclosure also provides a computer-readable storage medium. The storage medium may include a stored program. When the program is running, a device where the storage medium is located may be controlled to execute an image forming method provided by various embodiments of the present disclosure. For detailed description, the reference may be made to the above embodiments. The computer-readable storage medium may be a magnetic disk, an optical disk, a read only memory (ROM), or a random access memory (RAM), etc.

The technology in the embodiments of the present disclosure can be realized by means of software plus a necessary general hardware platform. Based on this understanding, the present disclosure implementation example of the technical solution or essentially part of existing technology to contribute can be manifested in the form of a software product, the computer software product can be stored in a storage medium, such as ROM/RAM, disk, CD, etc., including several instructions to make a computer equipment (is a personal computer, server, Or network equipment, etc.) to perform the methods described in various embodiments or parts of embodiments of the invention.

The identical and similar parts of the embodiments in the present disclosure may be referred to each other. In particular, for device embodiments and terminal embodiments, because they are basically similar to method embodiments, the description is relatively simple, and the relevant points can be described in the method embodiments.

## Claims

1. An image forming method applied to an image forming device, comprising:
obtaining imaging data and determining demand for each toner by the imaging data, wherein the imaging data includes at least one type of image data;
determining a remaining amount of each toner;
detecting whether there is at least one toner whose remaining amount is lower than the demand for the toner by the imaging data;
when there is at least one toner whose remaining amount is lower than the demand for the toner by the imaging data, obtaining an imaging mode and adjusting the demand for the toners by the imaging data based on the imaging mode; and
performing imaging processing on the imaging data based on the demand for the toners by the imaging data after adjustment.

2. The method according to claim 1, wherein adjusting the demand for the toners by the imaging data based on the imaging mode includes:
determining the image data of a target type corresponding to the imaging mode, and reducing the demand for a target toner by the image data of the target type, wherein the target toner is a toner whose remaining amount is lower than the demand for the toner by the imaging data.

3. The method according to claim 2, wherein:
the imaging mode includes at least one of a pattern priority mode, a text priority mode, and a life priority mode;
the image data of the target type corresponding to the pattern priority mode is first-type image data, and the first-type image data includes other types of image data in the imaging data except for pattern-type image data;
the image data of the target type corresponding to the text priority mode is second-type image data and the second-type image data includes other types of image data in the imaging data except for text-type image data; and
the image data of the target type corresponding to the life priority mode includes all types of image data.

4. The method according to claim 2, wherein:
reducing the demand for the target toner by the image data of the target type includes: replacing the demand for the target toner by the image data of the target type in the imaging data with the demand for at least one other toner by the image data of the target type, wherein the at least one other toner includes a toner other than the target toner.

5. The method according to claim 2, wherein:
reducing the demand for the target toner by the image data of the target type includes: replacing a first color corresponding to at least part of pixels in the image data of the target type with a second color, wherein the demand for the target toner by a single pixel corresponding to the second color is less than the demand for target toner by a single pixel corresponding to the first color.

6. The method according to claim 2, wherein:
reducing the demand for the target toner by the image data of the target type includes: increasing brightness of the image data of the target type, and/or reducing contrast of the image data of the target type.

7. The method according to claim 2 or 3, wherein:
adjusting the demand of the toners by the imaging data further includes: reducing the demand of the target toner by non-target type image data.

8. The method according to claim 1, wherein:
when there is at least one toner whose remaining amount is lower than the demand for the toner by the imaging data, obtaining the imaging mode includes:
when there is at least one toner whose remaining amount is lower than the demand for the toner by the imaging data, detecting whether the remaining amount of each toner is not less than a corresponding remaining amount threshold; and
when there are at least two toners whose remaining amount is not less than the corresponding remaining amount threshold, obtaining the imaging mode.

9. The method according to claim 1, wherein:
when there is at least one toner whose remaining amount is lower than the demand for the toner by the imaging data, obtaining the imaging mode includes:
when there is at least one toner whose remaining amount is lower than the demand for the toner by the imaging data, obtaining a toner replacement table is obtained, and detecting whether the target toner in the imaging data is able to be replaced with at least one other corresponding toner, wherein the toner replacement table is used to record at least one other toner corresponding to the target toner; and
when the target toner in the imaging data is able to be replaced with at least one other corresponding toner, obtaining the imaging mode.

10. The method according to claim 1, wherein:
when there is at least one toner whose remaining amount is lower than the demand for the toner by the imaging data, obtaining the imaging mode includes:
when there is at least one toner whose remaining amount is lower than the demand for the toner by the imaging data, obtaining a color replacement table, and detecting whether a first color corresponding to at least a portion of pixel points in the imaging data is able to be replaced with a second color, wherein the toner replacement table is used to record the second color corresponding to the first color; and
when the first color is able to be replaced with the second color, obtaining the imaging mode.

11. An image forming device, comprising:
a determination unit, configured to obtain imaging data and determine demand for each toner by the imaging data, where the imaging data includes at least one type of image data;
an adjustment unit, configured to determine a remaining amount of each toner, detect whether there is at least one toner whose remaining amount is lower than the demand for the toner by the imaging data, obtain an imaging mode and adjust the demand for the toners by the imaging data based on the imaging mode when there is at least one toner whose remaining amount is lower than the demand for the toner by the imaging data; and
an imaging unit, configured to perform imaging processing on the imaging data based on the demand for the toners by the imaging data after adjustment.

12. An electronic device, wherein, comprising:
one or more processors and a memory storing computer program instructions that, when being executed, cause the one or more processors to execute a method described in any one of the claims 1-10.

13. A non-transitory computer-readable storage medium containing a computer program that, when being executed, causes at least one processor to execute a method described in any one of the claims 1-10.
